# EUROPÄISCHE PATENTSCHRIFT

(11) **EP 2 072 364 B1**
(45) Veröffentlichungstag und Bekanntmachung des Hinweises auf die Patenterteilung: **26.12.2012**
(21) Anmeldenummer: 08105621.0
(22) Anmeldetag: 21.10.2008
(51) Int. Cl.: B60W 30/06, B62D 15/02

(54) **Vorrichtung zur semiautonomen Unterstützung eines Einparkvorganges eines Fahrzeuges**
Device for semi-automatic support for vehicle parking
Dispositif destiné à la prise en charge semi-automatique d'un processus de stationnement d'un véhicule

(30) Priorität: 21.12.2007 DE 102007062244
(43) Veröffentlichungstag der Anmeldung: 24.06.2009
(73) Patentinhaber: Robert Bosch GmbH, 70442 Stuttgart (DE)
(72) Erfinder: Oezaslan, Hakan, 71636 Ludwigsburg (DE); Schneider, Marcus, 71642 Ludwigsburg (DE)

(56) Entgegenhaltungen:
- EP-A- 0 448 059
- EP-A2- 1 867 557
- WO-A-2006/103030
- DE-A1- 10 136 410
- DE-A1-102004 054 437
- DE-A1-102005 005 969
- JP-A- 62 166 164
- US-A1- 2005 263 971

## Beschreibung

### Stand der Technik

Die Erfindung betrifft eine Vorrichtung zur semiautonomen Unterstützung eines Einparkvorganges eines Fahrzeuges, wie einem Kraftfahrzeug, mit einer Lenkeinrichtung zum lenkenden Bewegen von Rädern des Fahrzeugs, mit einer Steuervorrichtung zum Steuern der Lenkeinrichtung, wobei die Steuervorrichtung eine Recheneinrichtung zum Verarbeiten von Eingangswerten in einen die Lenkeinrichtung steuernden Ausgabewert aufweist.

Aus der Deutschen Patentanmeldung DE 10 2005 008 176 A1 ist eine Vorrichtung zur semiautonomen Unterstützung eines Einparkvorganges bei Fahrzeugen bekannt.

Im Gegensatz zu vollautonomen Vorrichtungen zur Unterstützung eines Einparkvorganges, ist bei semiautonomen Vorrichtungen, also Vorrichtungen, die Unterstützungsleistung semiautonom beim Einparken von Fahrzeugen zur Verfügung stellen, auf die Mithilfe eines Fahrzeugführers angewiesen. Der Fahrzeugführer muss bei Vorrichtungen zur semiautonomen Unterstützung eines Einparkvorganges zumindest entweder Gas geben und bremsen oder lenkend in den Einparkvorgang eingreifen. Im Gegensatz zu diesen semiautonom arbeitenden Vorrichtungen, ist bei vollautonomen Vorrichtungen, also Vorrichtungen, die vollautonom Unterstützungsleistung beim Einparkvorgang eines Fahrzeuges zusammenstellen, weder lenken noch bremsen und/oder Gas geben vom Fahrzeugführer erwartet.

Ferner ist bei Vorrichtungen, die semiautonom den Einparkvorgang von Fahrzeugen unterstützen, ein Eingreifen nur bedingt möglich.

Vorrichtungen zur semiautonomen Unterstützung eines Einparkvorganges finden in landgebundenen Fahrzeugen, insbesondere in mit einem Verbrennungsmotor ausgestatteten Kraftfahrzeugen, wie Pkws, Anwendung.

Aus der DE 10 2005 008 176 A1 ist bekannt, dass Mittel zur automatischen Lenkung Lenkmomente auf ein Lenkrad des einzuparkenden Fahrzeuges überlagern. Sind die Lenkmomente höher als die Reibkräfte zwischen Reifen und Fahrbahn, so lenkt das Fahrzeug automatisch. Der Fahrzeugführer kontrolliert allerdings die Lenkbewegung des Fahrzeuges selbstständig. Die aus der DE 10 2005 008 176 A1 bekannte Vorrichtung zur semiautonomen Unterstützung eines Einparkvorganges greift nicht selbstständig in die Steuerung der Lenkbewegung des Fahrzeuges ein. Allerdings wird mittels Sensoren, die auf der Fahrzeugaußenseite angebracht sind, sowohl die Parklücke vermessen, als auch eine gewünschte Einfahrtrajektorie ermittelt. Die Einfahrtrajektorie ist die Kurve, welche das Fahrzeug beim Einparken optimalerweise zurücklegt.

Aus dieser Druckschrift ist auch bekannt, dass Mittel vorgehalten werden, die die maximal mögliche Lenkgeschwindigkeit ermitteln. Ebenfalls ist bekannt, dass Mittel vorgehalten sind, die die Lenkgeschwindigkeit bestimmen, also die Geschwindigkeit für das Aufbringen von Lenkmomenten über entsprechende Aggregate auf ein Lenkrad und/oder eine Lenkwelle. Dabei wird in einer Recheneinrichtung ein Abgleich zwischen der berechneten Lenkgeschwindigkeit und der maximal möglichen Lenkgeschwindigkeit hergestellt. Ist die berechnete Lenkgeschwindigkeit höher als die maximal mögliche Lenkgeschwindigkeit, die die Mittel zur automatischen Lenkung aufbringen können, wird entweder ein Hinweis an den Fahrer ausgegeben, die Geschwindigkeit herabzusetzen oder die Geschwindigkeit wird über Begrenzungsmittel automatisch reduziert.

Wenn der Fahrzeugführer während des Einparkens des Fahrzeuges unter Zuhilfenahme der semiautonom arbeitenden Vorrichtung das Lenkrad nicht betätigt, wird das zur Steuerung des Lenkrades notwendige Lenkmoment ausschließlich von einer Lenkeinrichtung, also einer Lenkaktuatorik wie einem Elektromotor aufgebracht. Solche Elektromotoren sind Teil entsprechender Lenkeinrichtungen, die auch als EPS, d. h. Electronic Power Steering bekannt sind.

Es tritt jedoch allgemein das Problem auf, dass bei großen Lenkeinschlägen, insbesondere, wenn das einzuparkende Fahrzeug im Stillstand befindlich ist, große Lenkmomente aufzubringen sind. Es sind von der Lenkeinrichtung dann hohe Ströme, die zum Teil bis zu 100 Ampere betragen, notwendig. In solchen Hochlast-Situationen treten bei den aus dem Stand der Technik bekannten Vorrichtungen diverse Probleme auf. So können die bekannten Vorrichtungen das einzuparkende Fahrzeug nicht in einem Rückwärtszug einparken, sondern benötigen mindestens einen weiteren Vorwärtszug. Dieses Problem tritt insbesondere bei kleinen Parklücken auf. In solchen Fällen wird zum Erreichen eines geringen Endabstandes zu einer seitlichen Begrenzung, wie einem Bordstein jeder Richtungswechsel von einem Lenkungsvolleinschlag begleitet. Allerdings steht dabei das Fahrzeug meistens still, während die Lenkeinrichtung angewiesen wird, einen Lenkungsvolleinschlag auszuführen.

Die bisher verwendete Lenkmechanik weist eine ungünstige Kraftübersetzung, insbesondere bei großen Lenkwinkeln auf, so dass besonders hohe Lenkmomente aufzubringen sind, wenn ein Volleinschlag erreicht werden soll.

Die Probleme treten dann verschärft auf, wenn ein Bodenbelag, auf dem das Fahrzeug befindlich ist und/oder die von dem Fahrzeug verwendete Bereifung eine besonders gute Haftung aufweist. Es ist dann teilweise nur noch möglich, einen Teileinschlag zu erreichen.

Die Problematik verschärft sich weiter, wenn eine der Lenkeinrichtung Strom zuführende Batterie schwach ist oder ein Steueraggregat der Lenkeinrichtung eine hohe thermische Last detektiert, wodurch das maximal lieferbare Lenkmoment reduziert wird. Auch in solchen Fällen kann der gewünschte Lenkeinschlag nicht mehr vollständig umgesetzt werden.

Der maximal erreichbare Volleinschlag ist daher selbst innerhalb eines einzigen Einparkvorganges stark unterschiedlich und nicht in jedem Fall vorhersehbar.

Aus der US 2005/0263971 A1 ist ein Steuersystem für ein Fahrzeug bekannt, das zumindest ein Rad, welches sich dreht, um einen Einschlagwinkel festzulegen und ein Lenkradschloss, welches die Einwirkung eines Anwenders auf den Einschlagwinkel auf einen ausgewählten Maximalwert begrenzt, beinhaltet. Aus der WO 2006/103030 A1 geht ein variables Steuerungskontrollsystem hervor, das ein Stellelement beinhaltet, welches von einem Fahrer genutzt wird, um das Fahrzeug zu steuern und welches manövriert werden kann in einem maximalen Bereich zwischen einem linken Begrenzungsanschlag und einem rechten Begrenzungsanschlag. Dieses System liefert ein gewünschtes richtungs- und amplituden-quantisiertes Steuerungssignal. Weiterhin ist aus der EP 1867557 A2 eine automatische Einparkkontrolle bekannt, die abgebrochen wird, wenn ein Motorstrom mit einer Einschlagwinkelabweichung , die einen Abweichungsschwellwert überschreitet, noch nicht einen maximalen Stromwert erreicht hat. Darüber hinaus geht aus der DE 102004054437 A1 ein Verfahren zur automatischen Steuerung und/oder Regelung einer Bewegung eines Fahrzeugs während eines Einparkvorgangs mittels eines Einparksystems, umfassend zumindest eine Steuer- und/oder Regeleinrichtung, hervor. Aus der DE 102005005969 ist ein Verfahren und ein System zur Unterstützung eines semiautonomen Parkvorgangs bei einem Kraftfahrzeug bekannt, wobei die Größe einer Parklücke und die Position des Kraftfahrzeugs relativ zu der Parklücke erfasst werden und in Abhängigkeit von diesen erfassten Daten ein geeigneter Parkvorgangsweg ermittelt und automatisch die Lenkung des Kraftfahrzeugs entsprechend des ermittelten Parkvorgangswegs betätigt wird, wobei die Lenkung des Kraftfahrzeugs jedoch nur über einen Teilbereich des Parkvorgangswegs bis zu einer Zwischenposition des Kraftfahrzeugs automatisch betätigt wird, und bei dem Erreichen oder nach dem Erreichen der Zwischenposition dem Fahrer Anweisungen zum weiteren Verlauf des Parkvorgangswegs gegeben werden.

### Offenbarung der Erfindung

Es ist die Aufgabe der vorliegenden Erfindung, eine effektive Vorrichtung zur semiautonomen Unterstützung eines Einparkvorganges eines Fahrzeuges zur Verfügung zu stellen.

### Vorteile der Erfindung

Diese Aufgabe wird gattungsgemäß im Sinne der Erfindung dadurch gelöst, dass die Recheneinrichtung zur Verarbeitung von einem an den Rädern des Fahrzeuges maximal erreichbaren Lenkwinkels zusammen mit einem bei den jeweiligen Gegebenheiten maximal erreichbaren Lenkradwinkel in einem als Lenkradwinkel bezeichneten und der Lenkeinrichtung zuführbaren Ausgabewert ausgebildet ist.

Unter dem Lenkradwinkel wird der Winkel verstanden, der aufgrund des durch die Lenkeinrichtung mittels eines Lenkmomentes am Lenkrad und/oder der Lenkwelle aufgebracht wird und zu einem Verstellen des Lenkrades und/oder der Lenkwelle um einen bestimmten Betrag führt, wodurch eine Verstellung der Räder erzwungen wird.

Unter dem Lenkwinkel wird der Winkel verstanden, der an den lenkbaren Rädern eines Fahrzeuges anliegt. Der maximal erreichbare Lenkwinkel, liegt dabei bei einem Volleinschlag der Räder vor. Ein Volleinschlag am Lenkrad führt jedoch nicht zwangsläufig zu einem Volleinschlag, also zu einem maximal erreichbaren Lenkwinkel an den Rädern, da Spielfreiheiten, Toleranzen und Verwindungen berücksichtigt werden müssen.

Durch die Ausgestaltung der Vorrichtung entsprechend Anspruch 1 wird der maximal erreichbare Lenkradwinkel berücksichtigt, wie er durch die mittels der Lenkeinrichtung aufgebrachten Lenkmomente erzielt ist. Durch entsprechende Steuerung der Lenkeinrichtung, wird erreicht, dass das Fahrzeug bei Beendigung des Einparkvorganges besonders nahe an einer seitlichen Begrenzung und exakt in der Parklücke positioniert ist. Ein präziseres Einparken ist die Folge. Insbesondere ist es dabei möglich, einen tatsächlich maximal erreichbaren Lenkwinkel bei einer Berechnung der Einparkbahn zu berücksichtigen.

Im Folgenden werden vorteilhafte Ausführungsformen näher beschrieben, die in den Unteransprüchen beansprucht sind.

Wenn die Steuervorrichtung zum Ausgeben des Ausgabewertes an die Lenkeinrichtung zum Einstellen der Räder in einem ersten Korrekturzug und einem nachfolgenden zweiten Korrekturzug mit dem selben Lenkradwinkel, vorzugsweise dem selben maximal erreichbaren Lenkradwinkel ausgebildet ist, so wird vermieden, dass nach einem ersten Korrekturzug, in dem der erreichte Lenkwinkel kleiner als der maximal erreichbare Lenkwinkel ist, das Fahrzeug in einem darauffolgenden zweiten Korrekturzug tief genug in die Parklücke einfährt, um nach einem darauffolgenden dritten Korrekturzug parallel und möglichst nahe an einer Begrenzung, wie etwa einer Bordsteinkante, zu Stehen zu kommen.

Besonders einfach lässt sich die Verarbeitung des maximal erreichbaren Lenkwinkels mit dem maximal erreichbaren Lenkradwinkel erreichen, wenn die Steuervorrichtung eine den Wert des maximal erreichbaren Lenkwinkels liefernde Basisdatenübermittlungseinrichtung aufweist. Der maximal erreichbare Lenkwinkel ist dabei entweder manuell in die Basisdatenübermittlungseinrichtung eingebbar oder über Sensoren bestimmbar.

Der maximal erreichbare Lenkradwinkel lässt sich auch in einer weiteren vorteilhaften Ausführungsform besonders einfach der Recheneinrichtung zuführen, wenn die Steuervorrichtung eine den maximal erreichbaren Lenkradwinkel liefernde Wertermittlungseinheit aufweist.

Wenn die Wertermittlungseinrichtung zum Extrapolieren des maximal erreichbaren Lenkradwinkels basierend auf einem innerhalb einer bestimmten Zeit erreichbaren Lenkradwinkel ausgebildet ist, so lässt sich schon nach besonders kurzer Zeit eine Aussage über den maximal erreichbaren Lenkradwinkel treffen. Auch lässt sich dann in diesem vorteilhaften Ausführungsbeispiel in sehr kurzer Zeit der einzustellende Lenkradwinkel als Ausgabewert in der Recheneinrichtung berechnen.

In einem weiteren Ausführungsbeispiel hat es sich als vorteilhaft herausgesellt, wenn die Wertermittlungseinrichtung zum Bestimmen des maximal erreichbaren Lenkradwinkels basierend auf einem Schwingverhalten des Lenkradwinkels eingerichtet ist. Dies geschieht vorteilhafter Weise durch Anwenden und Auswerten einer Frequenzanalyse. Anhand bestimmter Charakteristika, wie etwa dem Schwingen des Lenkwinkels in einem bestimmten Frequenzbereich mit einer bestimmten Amplitude ist dann erkennbar, ob die Lenkung Probleme hat, den Endwert zu erreichen. Dabei wird frühzeitig der maximal erreichbare Lenkradwinkel ermittelbar.

Es hat sich in einer weiteren Ausführungsform auch als besonders vorteilhaft herausgesellt, wenn die Wertermittlungseinrichtung zum Bestimmen des maximal erreichbaren Lenkradwinkels basierend auf einer der Lenkeinrichtung zuführbaren maximal verfügbaren Lenkunterstützungskraft und/oder Lenkunterstützungsleistung ausgebildet ist. Dabei lassen sich als zusätzliche Absicherung, oder als alleinige Variante herkömmliche Leistungs- und/oder Kraftmessvorrichtungen verwenden.

Um eine besonders gute Anpassung an eine Begrenzung der Parklücke zu erreichen, ist es in einem weiteren Ausführungsbeispiel von Vorteil, wenn die Steuervorrichtung zum Einstellen eines Lenkradwinkels an der Lenkung bei einem dritten Korrekturzug ausgebildet ist, wobei der Lenkradwinkel einen Wert hat, der kleiner oder gleich dem maximal erreichbaren Lenkradwinkel ist.

Wenn die Recheneinrichtung zum Festlegen des maximal erreichbaren Lenkradwinkels nach Subtraktion eines Sicherheitswinkels vom maximal erreichbaren Lenkradwinkel ausgebildet ist, so ist auch sichergestellt, dass in einem nachfolgenden Korrekturzug ein Lenkradwinkel wählbar ist, der nicht geringer ist, als der in einem vorausgehenden Einparkvorgang verwendete Lenkradwinkel. Auf diese Art und Weise wird zumindest in zwei, direkt hintereinander stattfindenden Korrekturzügen der selbe Lenkradwinkel wählbar, was zu einer symmetrischen Einparkvorgangdurchführung führt.

Um die Präzision des Einparkvorganges weiter zu erhöhen, ist es in einer weiteren Ausführungsform von Vorteil, wenn die Steuervorrichtung zum Festlegen der Anzahl der Züge in Abhängigkeit von einer Abweichung des maximal erreichbaren Lenkradwinkels vom maximal erreichbaren Lenkwinkel ausgebildet ist.

### Kurze Beschreibung der Zeichnungen

Ausführungsbeispiele der Erfindung sind anhand der nachfolgenden Zeichnungen unter Angabe weiterer Vorteile und Einzelheiten näher erläutert. Es zeigen:
- Figuren 1a bis e: die Abfolge beim Durchlaufen eines optimalen Einparkvorganges,
- Figuren 2a bis e: die Abfolge beim Einparken eines Fahrzeuges in einem herkömmlichen Einparkvorgang, wobei im ersten Korrekturzug der Lenkradwinkel nicht gleich des maximal erreichbaren Lenkradwinkels gewählt ist,
- Figuren 3a bis d: das erfindungsgemäße Einparken unter Zuhilfenahme der erfindungsgemäßen Vorrichtung und
- Figur 4: ein schematisches Blockschaltbild der vorliegenden Erfindung.

### Ausführungsformen der Erfindung

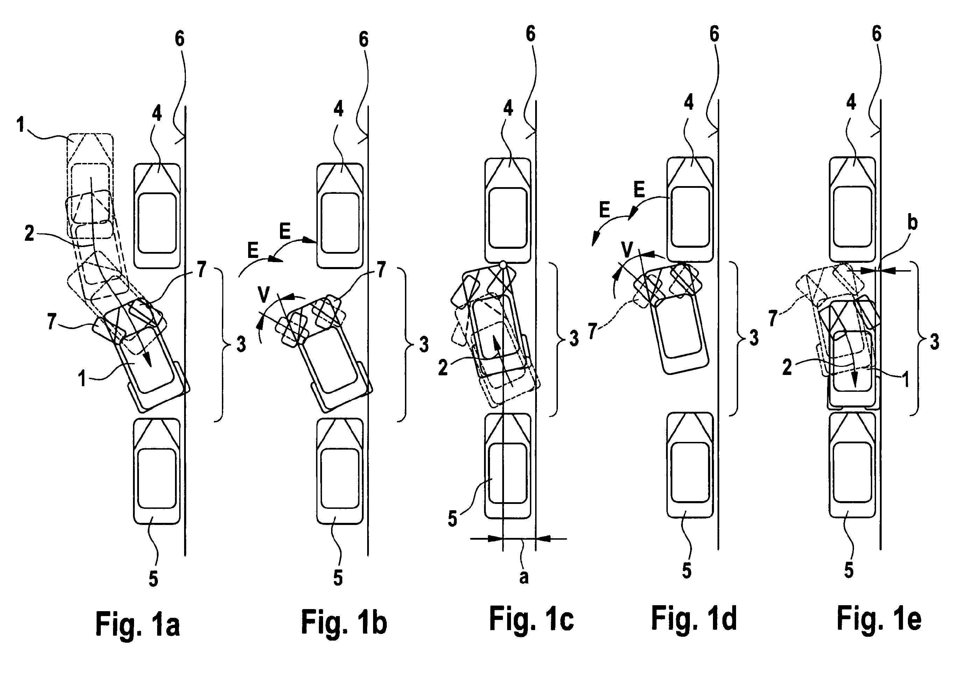

Figur 1a zeigt ein Fahrzeug 1 zu vier verschiedenen Zeitpunkten, wie es auf einer Einfahrtrajektorie 2 in eine Parklücke 3 in einem ersten Korrekturzug zwischen ein vorderes Fahrzeug 4 und ein hinteres Fahrzeug 5 einparkt. Am Ausgangspunkt des Einparkens ist das Fahrzeug 1 auf der Seite befindlich, an der keine seitliche Begrenzung 6 vorhanden ist. Im vorliegenden Ausführungsbeispiel ist die seitliche Begrenzung 6 als Bordstein ausgestaltet. Am Ende des ersten Abschnitts des Einparkvorganges ist das Fahrzeug 1 großteils in der Parklücke 3 enthalten. Das Einfahren wurde durch ein lenkendes Betätigen der Räder, insbesondere der vorderen Räder 7, erreicht. In der Parklücke angekommen, hält das Fahrzeug 1 an und richtet die Räder 7 mit einem Volleinschlag (Winkel V) nach rechts neu aus. Dies ist in Figur 1b dargestellt.

Anschließend wird so weit wie möglich vorwärts gefahren, was in Figur 1c dargestellt ist. Das Fahrzeug 1 hält auch hier wieder an, und die Räder 7 werden mit einem Volleinschlag V nach links neu ausgerichtet. Anschließend setzt das Fahrzeug (siehe Figur 1e) wieder zurück, so dass es anschließend in einer Linie mit den Fahrzeugen 4 und 5 befindlich ist.

In den Figuren 1c und 1e ist die für den jeweiligen Korrekturzug relevante ursprüngliche Position des Fahrzeugs 1 strichliert dargestellt. Die Bewegungsrichtung ist mittels eines Pfeils dargestellt, der die für diesen Moment relevante Einfahrtrajektorie 2 kennzeichnet. In den Figuren 1b und 1d ist die gemäß einer Einschlagrichtung veränderte Ausrichtung der Räder 7 mit den Pfeilen E dargestellt. Jeweils für das linke Rad ist der Volleinschlag der Räder 7 mit dem Winkel V dargestellt.

Das Fahrzeug 2 weist Sensoren auf, die die Annäherung an außerhalb des Fahrzeugs befindlichen Objekten, im vorliegenden Fall die seitliche Begrenzung 6, das vordere Fahrzeug 4 und das hintere Fahrzeug 5 sensieren. Dabei werden entsprechende Warnsignale an den Fahrzeugführer weitergeleitet, oder die Fahrzeuggeschwindigkeit entsprechend, nötigenfalls bis zum Stillstand, verringert. Nach dem in Figur 1c dargestellten Korrekturzug, hat das Fahrzeug vom vorderen rechten Eck aus gesehen einen Abstand a. Am Ende des Einparkvorganges ist der Endabstand des vorderen rechten Endes des Fahrzeugs 1 von der seitlichen Begrenzung 6 mit dem Abstand b gekennzeichnet. Der Abstand b kennzeichnet einen akzeptablen Abstand, so dass das Fahrzeug nicht aus der Parklücke 3 in die Fahrbahn ragt.

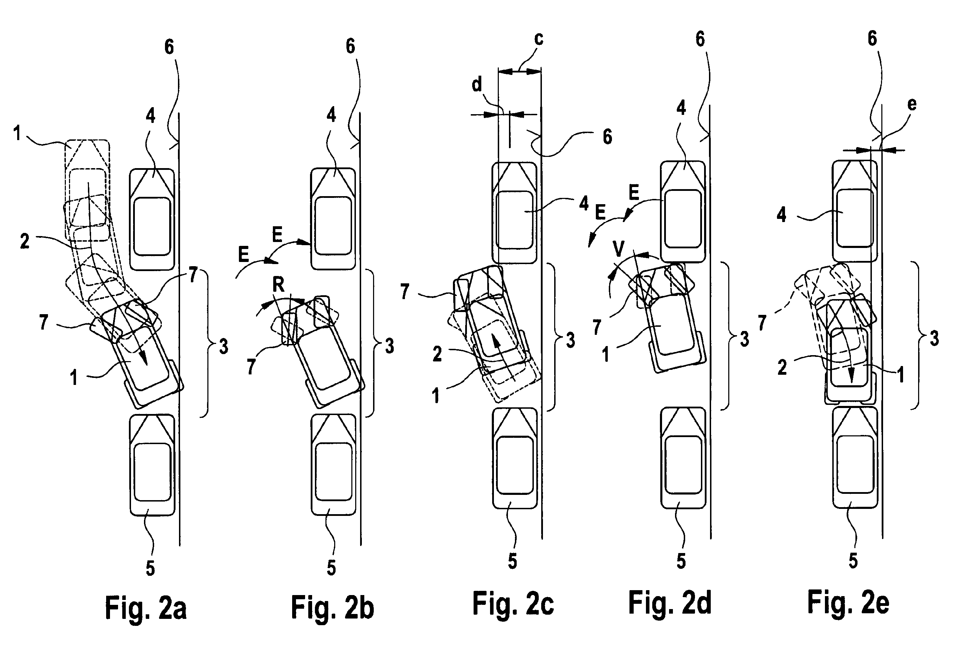

Die Figuren 2a bis 2e visualisieren den selben Einparkvorgang eines Fahrzeuges 1 in eine Parklücke 3 zwischen zwei Fahrzeugen 4 und 5. Auch hier verfolgt das Fahrzeug 1 den Verlauf einer Einparktrajektorie 2. Nach dem ersten Vorwärtszug weist das Fahrzeug 2 jedoch einen Abstand c zur seitlichen Begrenzung 6 auf, der größer als der Abstand a aus Figur 1c ist. Die Differenz ist als Abstand d dargestellt. Dass das Fahrzeug 2 weiterhin die Straße hinaus ragt, liegt daran, dass für den ersten Vorwärtszug, also hier den entsprechenden ersten Korrekturzug die Räder nicht auf einen Volleinschlag einstellbar sind. Aufgrund des geringeren Lenkeinschlages fährt das Fahrzeug weiter aus der Parklücke 3 heraus, als für den in Figur 1b und 1c dargestellten optimalen Fall. Während in Figur 1b ein Lenkwinkel R zum Erreichen des Volleinschlags V wirksam mittels eines angepassten Lenkradwinkels Wₘₐₓ wählbar ist, so ist in Figur 2b der Fall dargestellt, dass der Volleinschlag V nicht über den maximal erreichbaren Lenkradwinkel Wₘₐₓ erzielbar ist, sondern ein Lenkwinkel R erreicht ist, der kleiner als V ist. Dies liegt an den momentan vorherrschenden Bedingungen, wie beispielsweise einer zu hohen Reibung oder einer zu schwachen Batterie.

In der Figur 2d ist dargestellt, dass nun wiederum ein Lenkradwinkel W angewählt ist, der zu einem Volleinschlag V führt. In den Figuren 2b und 2d ist die Einschlagrichtung E mittels Pfeilen dargestellt. Auch in den Figuren 2b, 2c und 2e ist die Ausgangsposition des Fahrzeuges 1 strichliert dargestellt. Bei gewähltem Volleinschlag und erreichtem Volleinschlag an den Rädern 7, fährt das Fahrzeug 1 nun nicht weit genug in die Parklücke 3 ein, wie in Figur 2e dargestellt, so dass der Abstand e größer als b ist. Das Fahrzeug steht nun in die Fahrbahn über die Parklücke 3 an den Fahrzeugen 4 und 5 vorbei hinaus.

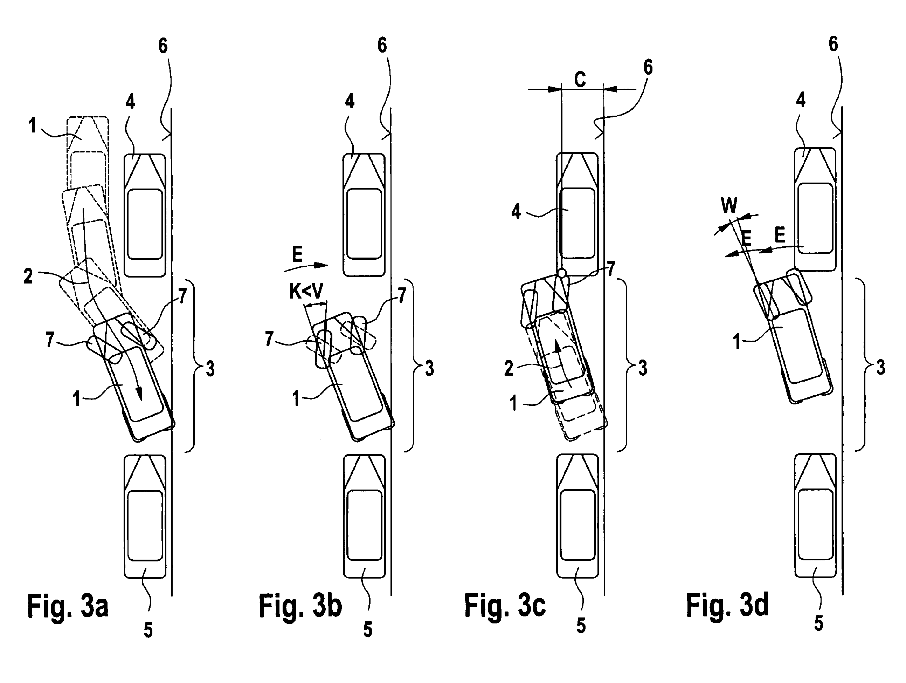

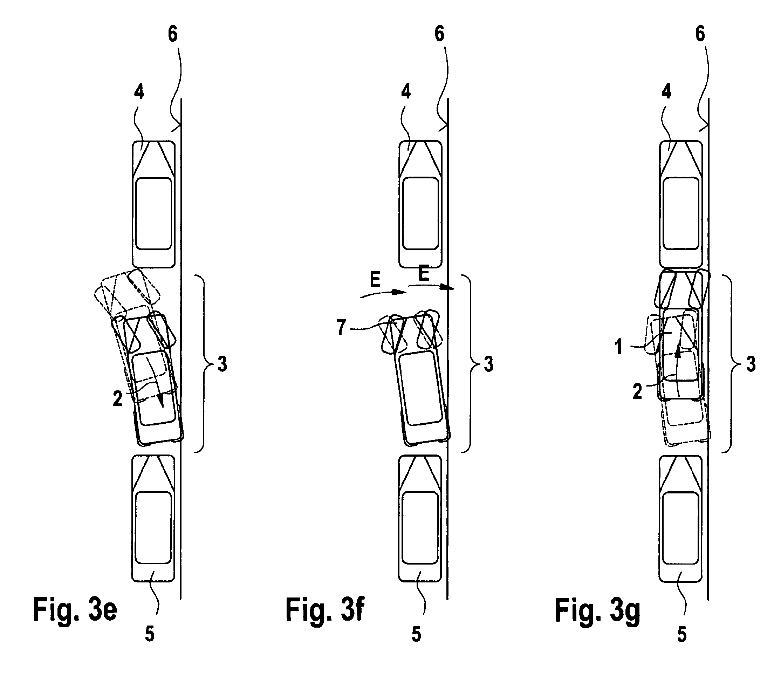

Hier setzt die Erfindung an, wie in den Figuren 3a bis 3g dargestellt. Das Fahrzeug 1 folgt auch hier einer Einfahrtrajektorie 2 in die Parklücke 3 zwischen dem Fahrzeug 4 und dem Fahrzeug 5 hinein. Es erfolgt zusätzlich ein letzter Korrekturzug nach vorne, wie er in den Figuren 3f und 3g dargestellt ist. In Figur 3a setzt das Fahrzeug 1 mit einem Rückwärtszug in die Parklücke 3, welche durch die beiden Fahrzeuge 4 und 5 begrenzt wird. In der Parklücke 3 angekommen, hält das Fahrzeug an und versucht die Räder 7 mit einem Volleinschlag V nach rechts auszurichten, was jedoch nicht gelingt. Eine Wertermittlungseinrichtung 8 registriert, dass der Lenkradwinkel W nur bis zu einem Wert eines maximal erreichbaren Lenkradwinkels Wₘₐₓ erzielbar ist. Die Wertermittlungseinrichtung erhält diese Information dadurch, dass der maximale Lenkwinkel gemessen wird, den die Lenkung innerhalb einer vorgegebenen Zeit erreicht. Daraus wird der maximal erreichbare Lenkradwinkel Wₘₐₓ ermittelt. Dies wird beispielsweise dadurch erkannt, dass nach drei Sekunden immer noch nicht der Volleinschlag V erreicht ist. Alternativ oder zusätzlich ist die Wertermittlungseinrichtung so ausgestaltet, dass sie in der Lage ist zu ermitteln, ob und wie stark der Lenkwinkel R schwingt. Dabei ist sie dermaßen eingerichtet, dass sie eine Frequenzanalyse anwenden und auswerten kann. Anhand bestimmter Charakteristika, etwa dem Schwingen des Lenkwinkels R in einem vorbestimmten Frequenzbereich mit einer bestimmten Amplitude, ist dann in einer Recheneinrichtung 9 , die Teil der Steuervorrichtung 10 ist, erkennbar, ob die Lenkeinrichtung 11 Probleme hat, den Sollwinkel zu erreichen und ein Maß ermittelbar, wie hoch der maximal erreichbare Lenkradwinkel Wₘₐₓ anwählbar ist. Zusätzlich oder alternativ ist es auch möglich, dass die maximal verfügbare Lenkunterstützung der Lenkeinrichtung abfragbar ist, wodurch der Lenkradwinkel W ableitbar ist. Es ist dabei die maximal verfügbare Lenkunterstützungskraft und/oder die maximal verfügbare Lenkunterstützungsleistung ermittelbar und in der Recheneinrichtung 9 weiter verwendbar. Die Recheneinrichtung 9 ist Teil der Steuervorrichtung 10, die einen Ausgabewert an die Lenkeinrichtung 11 zum Ausrichten der Räder 7 ausgibt. Über eine Basisdatenübermittlungseinrichtung 12 wird der vorliegende Lenkwinkel R und/oder der maximal erreichbare Lenkwinkel Rₘₐₓ an die Recheneinrichtung 9 weitergeleitet.

In dem Fall, dass der maximal erreichbare Lenkwinkel Rₘₐₓ als Funktion der Zeit ermittelt wird, reduziert das Gesamtsystem bei Vorliegen von Problemen, insbesondere die Recheneinrichtung 9, den Sollwinkel auf den Lenkradwinkel W, den das Fahrzeug 2 z.B. nach zwei Sekunden bereits erreicht hatte. Das heißt, dass die Räder 7 letztendlich auf den reduzierten Lenkradwinkel W du damit den dazu identischen Lenkwinkel R ausgerichtet werden. Dies ist in Figur 3b dargestellt. Anschließend wird so weit wie möglich vorwärts gefahren, was in Figur 3c dargestellt ist.

Der sich einstellende Abstand c zwischen der vorderen rechten Ecke des Fahrzeuges 1 und einer seitlichen Begrenzung 6 ist als c gekennzeichnet und größer als a aus Figur 1c und in etwa genauso groß, wie Abstand c aus Figur 2c.

Das Fahrzeug 1 hält an dieser Stelle an, wobei die Räder wieder mit dem selben Winkel wie im vorhergehenden Zug, siehe Figur 3c, in die andere Richtung gemäß dem Pfeil E ausgerichtet werden. Dies ist in Figur 3d dargestellt. Der selbe Winkel wie in Figur 3b liegt innen an. Es liegt der im ersten Korrekturzug genutzte Lenkradwinkel W, siehe Figur 3b nun auch für den nachfolgenden zweiten Korrekturzug vor. Dadurch wird der vorher festgestellte Fehler symmetrisch und gleicht sich aus. Das Fahrzeug 1 ist nun tiefer als im Fall 2e, wie in Figur 3e dargestellt, in die Parklücke 3 einfahrbar. Das Fahrzeug 2 steht nun zwar immer noch etwas schräg, ist aber wieder sehr tief in die Parklücke 3 eingefahren, da das festgestellte Problem symmetrisch behandelt ist. Das heißt, das Fahrzeug 2 wird um praktisch den selben Betrag wieder zu tief in die Parklücke 3 gefahren, wie zuvor aus der Parklücke 3 herausgefahren wurde.

In Figur 3f wird nun ein abschließender Vorwärtszug vorbereitet, für den die Räder nach rechts auf einen notwendigen Winkel, im vorliegenden Fall den Lenkradwinkel W gelenkt werden.

In Figur 3g ist das eingeparkte Fahrzeug 2 im Endzustand dargestellt. Der Abstand des Fahrzeugs 2 zur seitlichen Begrenzung 6 ist wie in Figur 1e mit einem Abstand a gekennzeichnet. Der Abstand a ist ähnlich groß wie in Figur 1g und zeigt ein akzeptables Endergebnis. Das Fahrzeug 2 steht nicht über die Parklücke 3 in die Fahrbahn hinaus, was wünschenswert ist.

Auch in den Figuren 3c, 3e, 3f und 3g sind die jeweiligen Positionen im Ausgangszustand des Fahrzeuges 2, vor Durchführen des Versetzens entlang der Trajektorie 2 strichliert dargestellt.

In den einzelnen Figuren werden für die selben Elemente die selben Bezugszeichen verwendet.

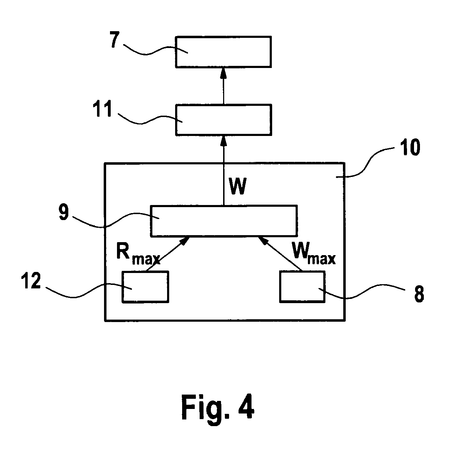

In Figur 4 ist der schematische Aufbau der erfindungsgemäßen Vorrichtung in einem Blockschaltbild erläutert. Die Steuervorrichtung 10 weist die Recheneinrichtung 9, die Basisdatenübermittlungseinrichtung 12 und die Wertermittlungseinrichtung 8 auf.

Die Basisdatenübermittlungseinrichtung 12 liefert den Wert für den maximal erreichbaren Lenkwinkel Rₘₐₓ an die Recheneinrichtung 9. Die Wertermittlungseinrichtung 8 ermittelt den maximal erreichbaren Lenkradwinkel Wₘₐₓ und sendet diesen an die Recheneinrichtung 9. Die Wertermittlungseinrichtung 8 ermittelt den maximal erreichbaren Lenkradwinkel Wₘₐₓ über eine Extrapolation eines gemessenen Lenkradwinkels W in Abhängigkeit von der Zeit, und/oder über eine Analyse des Schwingens des Lenkradwinkels W und Extrapolation bzgl. eines maximal erreichbaren Lenkradwinkel Wₘₐₓ und/oder über eine Analyse der zur Verfügung stehenden Kraft und/oder Leistung an der Lenkreinrichtung 11. Die Lenkeinrichtung 11 erhält von der Recheneinrichtung 9 den einzuschlagenden Wert für den Lenkradwinkel W, als Ausgabewert.

Die Lenkeinrichtung 11, umfasst dabei einen Elektromotor, der ein Lenkmoment auf die Räder 7 aufbringt. Dadurch werden die Räder 7 in eine der z. B. in den Figuren 3b und 3d gezeigten Richtung gemäß dem Pfeil E, also der Einschlagrichtung, ausgelenkt. Der erreichte Lenkwinkel R entspricht dann dem eingestellten Lenkradwinkel W, und ist nicht größer als W_{max•}

Die Recheneinrichtung 9 zieht bei der Ermittlung des an die Lenkeinrichtung 11 weitergegebenen Wertes des Lenkradwinkels W einen Sicherheitswinkel S in einer Größenordnung von 50° ab, um dem Rechnung zu tragen, dass bei Veränderung der Fahrzeugposition größere Reibkräfte zwischen den Rädern 7 und dem Bodenbelag vorliegen, und dann eine Einstellung des Lenkradwinkels W auf den selben Wert wie im vorausgehenden Korrekturzug nicht möglich ist. Dadurch wird sichergestellt, dass selbst bei Verbesserung der Reibung zwischen den Rädern 7 und dem Bodenbelag immer noch der maximal erreichbare Lenkradwinkel Wₘₐₓ an den Rädern 7 in Form des maximal erreichbaren Lenkwinkels Rₘₐₓ = Wₘₐₓ erreichbar ist. Die Begrenzung des Einschlags wird über eine mechanische Sperre realisiert.

Ein angepasstes Verfahren bedient sich anstelle des Lenkradwinkels des Lenkwinkels und umgekehrt.

## Patentansprüche

1. Vorrichtung zur semiautonomen Unterstützung eines Einparkvorganges eines Fahrzeuges (1), mit einer Lenkeinrichtung (11) zum lenkenden Bewegen von Rädern (7) des Fahrzeugs (1), mit einer Steuervorrichtung (10) zum Steuern der Lenkeinrichtung (11), wobei die Steuervorrichtung (10) eine Recheneinrichtung (9) zum Verarbeiten von Eingangswerten in einen die Lenkeinrichtung (11) steuernden Ausgabewert aufweist, **dadurch gekennzeichnet, dass** die Recheneinrichtung (9) zur Verarbeitung eines an den Rädern (7) des Fahrzeugs (1) maximal erreichbaren Lenkwinkels (Rₘₐₓ) zusammen mit einem bei den jeweiligen Gegebenheiten maximal erreichbaren Lenkradwinkel (Wₘₐₓ) in einen als Lenkradwinkel (W) bezeichneten und der Lenkeinrichtung (11) zuführbaren Ausgabewert ausgebildet ist, wobei der Ausgabewert ein einzuschlagender Wert für den Lenkradwinkel (W) ist.

2. Vorrichtung nach Anspruch 1, wobei die Steuervorrichtung (10) zum Ausgeben des Ausgabewertes an die Lenkreinrichtung (11) zum Einstellen der Räder (7) in einem ersten Korrekturzug und einem nachfolgenden zweiten Korrekturzug mit dem selben Lenkradwinkel (W) vorzugsweise mit dem selben maximal erreichbaren Lenkradwinkel (Wₘₐₓ) ausgebildet ist.

3. Vorrichtung nach Anspruch 1 oder 2, wobei die Steuervorrichtung (10) eine den Wert des maximal erreichbaren Lenkwinkels (Rₘₐₓ) liefernde Basisdatenübermittlungseinrichtung (12) aufweist.

4. Vorrichtung nach einem der Ansprüche 1 bis 3, wobei die Steuervorrichtung (10) eine den maximal erreichbaren Lenkradwinkel (Wₘₐₓ) liefernde Wertermittlungseinrichtung (8) aufweist.

5. Vorrichtung nach Anspruch 4, wobei die Wertermittlungseinrichtung (8) zum Extrapolieren des maximal erreichbaren Lenkradwinkels (Wₘₐₓ) basierend auf einem innerhalb einer bestimmten Zeit (t) erreichten Lenkradwinkel (W) ausgebildet ist.

6. Vorrichtung nach Anspruch 4 oder 5, wobei die Wertermittlungseinrichtung (8) zum Bestimmen des maximal erreichbaren Lenkradwinkels (Wₘₐₓ) basierend auf einem Schwingverhalten des Lenkradwinkels (W) eingerichtet ist.

7. Vorrichtung nach einem der Ansprüche 4 bis 6, wobei die Wertermittlungseinrichtung (8) zum Bestimmen des maximal erreichbaren Lenkradwinkels (Wₘₐₓ) basierend auf einer der Lenkeinrichtung (11) zuführbaren maximal verfügbaren Lenkunterstützungskraft und/oder Lenkunterstützungsleistung ausgebildet ist.

8. Vorrichtung nach einem der Ansprüche 1 bis 7, wobei die Steuervorrichtung (10) zum Einstellen eines Lenkradwinkels (W) an der Lenkung bei einem dritten Korrekturzug ausgebildet ist, wobei der Lenkradwinkel (W) einen Wert hat, der kleiner oder gleich dem maximal erreichbaren Lenkradwinkel (Wₘₐₓ) ist.

9. Vorrichtung nach einem der Ansprüche 3 bis 8, wobei die Recheneinrichtung (9) zum Festlegen des maximal erreichbaren Lenkradwinkels (Wₘₐₓ) nach Subtraktion eines Sicherheitswinkels (S) vom maximal erreichbaren Lenkradwinkel (Rₘₐₓ) ausgebildet ist.

10. Vorrichtung nach einem der Ansprüche 1 bis 9, wobei die Steuervorrichtung (10) zum Festlegen der Anzahl der Züge in Abhängigkeit von einer Abweichung (D) des maximal erreichbaren Lenkradwinkels (Wₘₐₓ) vom maximal erreichbaren Lenkwinkel (Rₘₐₓ) ausgebildet ist.

11. Verfahren zur semiautonomen Unterstützung eines Einparkvorgangs eines Fahrzeugs (1), wobei eine Lenkeinrichtung (11) eine lenkende Bewegung von Rädern (7) des Fahrzeugs (1) durchführt, wobei eine Steuereinrichtung (10) die Lenkeinrichtung (11) steuert und wobei eine Recheneinrichtung (9) einen an den Rädern (7) des Fahrzeugs maximal erreichbaren Lenkwinkel (Rₘₐₓ) und einen bei einer jeweiligen Gegebenheit maximal erreichbaren Lenkradwinkel (Wₘₐₓ) derart verarbeitet, dass ein als Lenkradwinkel (W) bezeichneter Ausgabewert zur Steuerung der Lenkeinrichtung an die Lenkeinrichtung ausgegeben wird, wobei der Ausgabewert einen einzuschlagenden Wert für den Lenkradwinkel (W) darstellt.

## Claims

1. Device for providing semi-autonomous assistance for a parking process of a vehicle (1), having a steering device (11) for moving wheels (7) of the vehicle (1) in a steering fashion, having a control device (10) for controlling the steering device (11), wherein the control device (10) has a computing device (9) for processing input values into an output value which controls the steering device (11), **characterized in that** the computing device (9) is designed to process a steering angle (Rₘₐₓ) which is the maximum one which can be achieved at the wheels (7) of the vehicle (1), together with a steering wheel angle (Wₘₐₓ) which is the maximum one which can be achieved under the respective conditions, into an output value which is referred to as a steering wheel angle (W) and can be fed to the steering device (11), wherein the output value is a value to be adopted for the steering wheel angle (W).

2. Device according to Claim 1, wherein the control device (10) is designed to output the output value to the steering device (11) in order to set the wheels (7) in a first correction movement and a subsequent second correction movement with the same steering wheel angle (W), preferably with the same maximum achievable steering wheel angle (Wₘₐₓ).

3. Device according to Claim 1 or 2, wherein the control device (10) has a base data transfer device (12) which supplies the value of the maximum achievable steering angle (Rₘₐₓ).

4. Device according to one of Claims 1 to 3, wherein the control device (10) has a value-determining device (8) which supplies the maximum achievable steering wheel angle (Wₘₐₓ).

5. Device according to Claim 4, wherein the value-determining device (8) is designed to extrapolate the maximum achievable steering wheel angle (Wₘₐₓ) on the basis of a steering wheel angle (W) which is achieved within a specific time (t).

6. Device according to Claim 4 or 5, wherein the value-determining device (8) is configured to determine the maximum achievable steering wheel angle (Wₘₐₓ) on the basis of an oscillatory behaviour of the steering wheel angle (W).

7. Device according to one of Claims 4 to 6, wherein the value-determining device (8) is designed to determine the maximum achievable steering wheel angle (Wₘₐₓ) on the basis of a maximum available steering assistance force and/or steering assistance force performance power which can be fed to the steering device (11).

8. Device according to one of Claims 1 to 7, wherein the control device (10) is designed to set a steering wheel angle (W) at the steering system in the event of a third correction movement, wherein the steering wheel angle (W) has a value which is less than or equal to the maximum achievable steering wheel angle (Wₘₐₓ).

9. Device according to one of Claims 3 to 8, wherein the computing device (9) is designed to define the maximum achievable steering wheel angle (Wₘₐₓ) after subtraction of a safety angle (S) from the maximum achievable steering angle (Rₘₐₓ).

10. Device according to one of Claims 1 to 9, wherein the control device (10) is designed to define the number of movements as a function of a deviation (D) of the maximum achievable steering wheel angle (Wₘₐₓ) from the maximum achievable steering angle (Rₘₐₓ).

11. Method for providing semi-autonomous assistance for a parking process of a vehicle (1), wherein a steering device (11) carries out a steering movement of wheels (7) of the vehicle (1), wherein a control device (10) controls the steering device (11), and wherein a computing device (9) processes a steering angel (Rₘₐₓ) which is the maximum one which can be achieved at the wheels (7) of the vehicle and a steering wheel angle (Wₘₐₓ) which is the maximum one which can be achieved under a respective condition, in such a way that an output value which is referred to as a steering wheel angle (W) and has the purpose of controlling the steering device is output to the steering device, wherein the output value constitutes a value which is to be adopted for the steering wheel angle (W).

## Revendications

1. Dispositif d'assistance semi-autonome d'une manoeuvre d'entrée en stationnement d'un véhicule (1), comprenant un appareillage de direction (11) pour un mouvement de direction de roues (7) du véhicule (1), comprenant un dispositif de commande (10) pour commander l'appareillage de direction (11), le dispositif de commande (10) présentant un appareillage de calcul (9) pour conditionner des valeurs d'entrée en une valeur de sortie qui commande l'appareillage de direction (11), **caractérisé en ce que** l'appareillage de calcul (9) est configuré pour conditionner un angle de direction maximum (Rₘₐₓ) pouvant être atteint au niveau des roues (7) du véhicule (1), conjointement avec un angle de volant de direction maximum (Wₘₐₓ) pouvant être atteint avec les conditions correspondantes, en une valeur de sortie appelée angle de volant de direction (W) et qui peut être acheminée à l'appareillage de direction (11), la valeur de sortie étant une valeur à adopter pour l'angle de volant de direction (W).

2. Dispositif selon la revendication 1, dans lequel le dispositif de commande (10) est configuré pour délivrer la valeur de sortie à l'appareillage de direction (11) en vue de régler les roues (7) dans un premier parcours de correction et un deuxième parcours de correction suivant avec le même angle de volant de direction (W), de préférence avec le même angle de volant de direction maximum (Wₘₐₓ) pouvant être atteint.

3. Dispositif selon la revendication 1 ou 2, dans lequel le dispositif de commande (10) présente un appareillage de communication de données de base (12) qui délivre la valeur de l'angle de direction maximum (Rₘₐₓ) pouvant être atteint.

4. Dispositif selon l'une des revendications 1 à 3, dans lequel le dispositif de commande (10) présente un appareillage de détermination de valeur (8) qui délivre l'angle de volant de direction maximum (Wₘₐₓ) pouvant être atteint.

5. Dispositif selon la revendication 4, dans lequel l'appareillage de détermination de valeur (8) est configuré pour extrapoler l'angle de volant de direction maximum (Wₘₐₓ) pouvant être atteint en se basant sur un angle de volant de direction (W) atteint pendant un temps (t) donné.

6. Dispositif selon la revendication 4 ou 5, dans lequel l'appareillage de détermination de valeur (8) est conçu pour déterminer l'angle de volant de direction maximum (Wₘₐₓ) pouvant être atteint en se basant sur un comportement oscillant de l'angle de volant de direction (W).

7. Dispositif selon l'une des revendications 4 à 6, dans lequel l'appareillage de détermination de valeur (8) est configuré pour déterminer l'angle de volant de direction maximum (Wₘₐₓ) pouvant être atteint en se basant sur une force d'assistance à la direction et/ou une puissance d'assistance à la direction maximale disponible pouvant être acheminée à l'appareillage de direction (11).

8. Dispositif selon l'une des revendications 1 à 7, dans lequel le dispositif de commande (10) est configuré pour régler un angle de volant de direction (W) sur la direction lors d'un troisième parcours de correction, l'angle de volant de direction (W) ayant une valeur qui est inférieure ou égale à l'angle de volant de direction maximum (Wₘₐₓ) pouvant être atteint.

9. Dispositif selon l'une des revendications 3 à 8, dans lequel l'appareillage de calcul (9) est configuré pour définir l'angle de volant de direction maximum (Wₘₐₓ) pouvant être atteint après avoir soustrait un angle de sécurité (S) de l'angle de direction maximum (Rₘₐₓ) pouvant être atteint.

10. Dispositif selon l'une des revendications 1 à 9, dans lequel le dispositif de commande (10) est configuré pour définir le nombre de parcours en fonction d'un écart (D) de l'angle de volant de direction maximum (Wₘₐₓ) pouvant être atteint par rapport à l'angle de direction maximum (Rₘₐₓ) pouvant être atteint.

11. Procédé d'assistance semi-autonome d'une manoeuvre d'entrée en stationnement d'un véhicule (1), un appareillage de direction (11) exécutant un mouvement de direction de roues (7) du véhicule (1), un dispositif de commande (10) commandant l'appareillage de direction (11) et un appareillage de calcul (9) conditionnant un angle de direction maximum (Rₘₐₓ) pouvant être atteint au niveau des roues (7) du véhicule et un angle de volant de direction maximum (Wₘₐₓ) pouvant être atteint avec une condition correspondante de telle sorte qu'une valeur de sortie appelée angle de volant de direction (W) est délivrée à l'appareillage de direction pour commander l'appareillage de direction, la valeur de sortie représentant une valeur à adopter pour l'angle de volant de direction (W).
